# EUROPÄISCHE PATENTSCHRIFT

(11) **EP 0 826 563 B1**
(45) Veröffentlichungstag und Bekanntmachung des Hinweises auf die Patenterteilung: **24.10.2001**
(21) Anmeldenummer: 97113965.4
(22) Anmeldetag: 13.08.1997
(51) Int. Cl.: B60R 21/20, B60R 16/00, B62D 1/11

(54) **Abdeckung eines in ein Fahrzeuglenkrad integrierten Gassack-Moduls**
Cover for an airbag module integrated in the steering wheel of a vehicle
Couvercle pour un module de sac de sécurité gonflable intégré dans le volant d'un véhicule

(30) Priorität: 02.09.1996 DE 29615261 U
(43) Veröffentlichungstag der Anmeldung: 04.03.1998
(73) Patentinhaber: TRW Occupant Restraint Systems GmbH & Co. KG, 73551 Alfdorf (DE)
(72) Erfinder: Heilig, Alexander, 73550 Wissgoldingen (DE)
(74) Vertreter: Degwert, Hartmut, Dipl.-Phys.

(56) Entgegenhaltungen:
- US-A- 4 614 282
- US-A- 5 369 232
- US-A- 5 383 682
- US-A- 5 779 261

## Beschreibung

Die Erfindung betrifft eine Abdeckung eines Gassack-Moduls, das in ein vorderseitig offenes Nabenteil eines Fahrzeuglenkrads integriert ist, sowie ein Fahrzeuglenkrad mit einer derartigen Abdeckung.

Bislang bekannte vorderseitige Abdeckungen eines Fahrzeuglenkrads, in dessen Nabenteil ein Gassack-Modul integriert ist, haben die Form einer gewölbten Platte und werden von vorn auf das Nabenteil aufgesetzt und von hinten verschraubt. Eine derartige Abdeckung kann aus dem Dokument US-A-5383682 als bekannt gelten. Ferner gibt es Abdeckungen, die Rastnasen aufweisen, welche in entsprechende Ausnehmungen im Lenkrad einschnappen können.

Die Erfindung schafft eine Abdeckung, die auf einfache Weise von vorn montiert werden kann. Durch die erfindungsgemäße Abdeckung kann das Lenkrad selbst wenigstens im Bereich der Nabe eine geringere oder überhaupt keine Umschäumung mehr aufweisen, was die Zugänglichkeit zu Befestigungstellen beim Arretieren des Gassack-Moduls und des Lenkrads erhöht. Dies wird bei einer Abdeckung der eingangs genannten Art erfindungsgemäß dadurch erreicht, daß die Abdeckung als den Nabenkörper ummantelnder, elastisch nachgiebiger Hohlkörper ausgebildet ist, der eine obere Wand, eine untere Wand und eine diese verbindende Seitenwand aufweist und im Bereich der unteren Wand geöffnet werden kann, um von vorn über den Nabenkörper gestülpt zu werden, und der zur Arretierung am Lenkrad dieses mit der unteren Wand hintergreift. Die erfindungsgemäße Abdeckung bildet wenigstens einen Teil der Polsterung des Nabenkörpers, so daß dieser geringfügig oder überhaupt nicht mehr umschäumt sein muß. Das somit leichter ausgeführte Lenkrad ist zur Montage an der Lenkwelle besser zugänglich, was die Montagezeit insgesamt verkürzt.

Bei der bevorzugten Ausführungsform weist die Abdeckung manschettenartige Fortsätze auf, die die Lenkradspeichen mindestens auf einem Teil ihrer Länge umschließen und die im Bereich der unteren Wand längs der Lenkradspeichen zur Montage geöffnet werden können. Damit muß auch die Lenkradspeiche nur noch teilweise oder sogar überhaupt nicht mehr umschäumt werden. In letzterem Fall ist das Lenkradgerippe von der Abdeckung umgeben, und nur noch der Lenkradkranz muß umschäumt sein. Da ein Großteil der Oberfläche des Lenkrads von der erfindungsgemäßen Abdeckung ummantelt wird, kann das Lenkrad als Grundkörper immer gleich aufgebaut sein und ein gleiches Aussehen aufweisen, denn sein endgültiges Aussehen wird von der Abdeckung bestimmt. Damit müssen nur noch Abdeckungen mit unterschiedlichen Oberflächen vorgesehen sein, um ein Fahrzeug mit einem Lenkrad mit entsprechender Farbe und Oberflächennarbung zu bestücken, wodurch eine Modulbauweise erreichbar ist. Ferner können auch geringfügig voneinander abweichende Lenkradformen mit der gleichen Abdeckung versehen werden.

Zur Arretierung der Abdeckung am Lenkrad weist die Abdeckung Einrichtungen auf, die mit Befestigungseinrichtungen am Lenkrad in Eingriff gebracht werden können. Darüber hinaus ist es jedoch auch möglich, daß die zum Aufstülpen der Abdeckung zu öffnenden, manschettenartigen Fortsätze durch miteinander in Eingriff bringbare Befestigungseinrichtungen an gegenüberliegenden Verschlußrändern der unteren Wand wieder geschlossen werden können. Damit müssen keine Befestigungseinrichtungen mehr am Lenkrad selbst vorgesehen sein, denn die als Hohlkörper ausgebildete Abdeckung wird vollständig geöffnet, um das Lenkrad gespannt und anschließend wieder geschlossen.

An der Außenfläche der oberen Wand sind abgesetzte und/oder vorstehende Bereiche, die federnd nachgiebige Schaltflächen bilden, vorgesehen. Durch Betätigung dieser Schaltflächen können elektrische Stromkreise einer an der Innenseite der Abdeckung befestigten Schaltfolie oder einer integrierten, elektrisch leitenden Schicht geschlossen werden, so daß im Lenkrad Bedienelemente integriert werden. Die Schaltfolie kann zum Beispiel eine Membranfolie oder Potentiometerfolie sein.

Die Schaltfolie muß jedoch nicht zwingend an der Abdeckung befestigt sein. Beim erfindungsgemäßen Lenkrad, das mit der erfindungsgemäßen Abdeckung versehen ist, kann die Schaltfolie auch an der Vorderseite des Gassack-Moduls befestigt sein oder einfach zwischen der Vorderseite des Gassack-Moduls und der Abdeckung eingelegt werden. Die gesamten Schaltelemente sind so in die Abdeckung selbst integrierbar, weshalb der Lenkradkörper ohne die Abdeckung einfacher ausgeführt werden kann.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine perspektivische Draufsicht auf eine erfindungsgemäße Abdeckung als Teil eines erfindungsgemäßen Fahrzeuglenkrads,
- Figur 2 eine perspektivische Unteransicht der in Figur 1 gezeigten Abdeckung, und
- Figuren 3a und 3b eine Schnittansicht durch die obere Wand der Abdeckung im Bereich einer Schaltfläche, die sich gemäß Figur 3a in unbetätigtem und gemäß Figur 3b in betätigtem Zustand befindet.

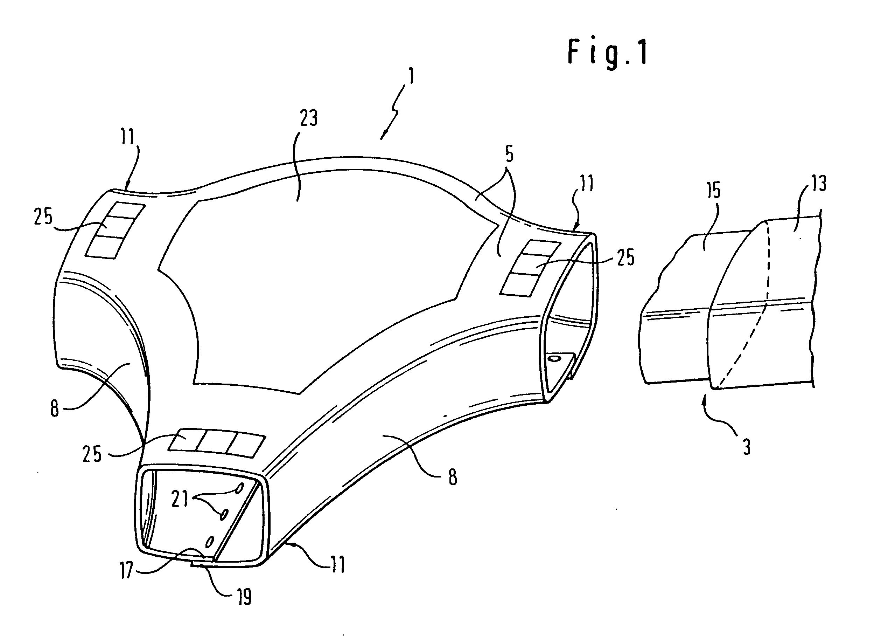

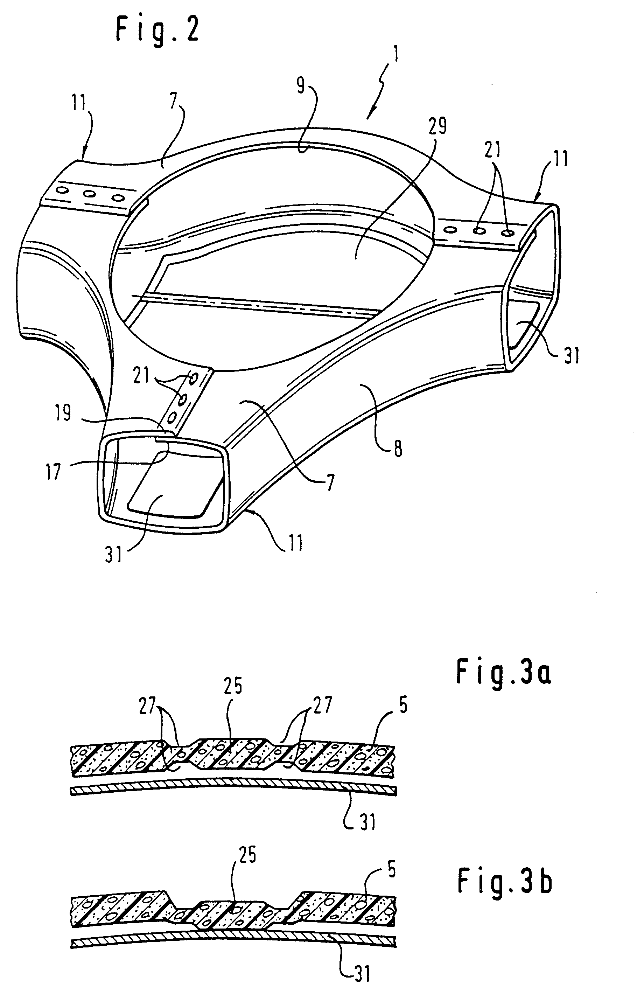

In Figur 1 ist eine Abdeckung 1 für ein Fahrzeuglenkrad gezeigt, von dem nur ein Teil eines seiner drei Lenkradspeichen 3 dargestellt ist. Die Abdeckung 1 dient dazu, das Nabenteil des Lenkrads, in das ein nicht gezeigtes Gassack-Modul von vorn eingesetzt ist, zur Vorderseite hin abzudecken, da das Nabenteil in diesem Bereich ausgespart ist. Die Abdeckung 1 besteht aus einem geschäumten Kunststoff mit einer Oberfläche, die von der Struktur und der Farbe her der Oberflächengestaltung des umschäumten Lenkradkranzes (nicht gezeigt) angepaßt ist. In ihrer Kontur ist die Abdeckung 1 der Außenkontur der Lenkradnabe angepaßt, welche nur geringfügig umschäumt ist. Die Abdeckung 1 hat die Form eines Hohlkörpers, der im Bereich seiner oberen Wand 5 geschlossen und im Bereich seiner unteren Wand 7 eine Ausnehmung 9 (vgl. Figur 2) im Bereich der Lenkwelle aufweist, an der das Lenkrad befestigt ist. Die obere und die untere Wand 5 bzw. 7 werden durch Seitenwände 8 miteinander verbunden. Die Abdeckung 1 umgibt in ihrem am Lenkrad fixierten Zustand nicht nur allseitig die Lenkradnabe, sondern auch einen Teil der Lenkradspeichen 3, da die Abdeckung 1 manschettenförmige Fortsätze 11 für jede Lenkradspeiche 3 aufweist. Die Lenkradspeichen 3 sind im Bereich der Fortsätze 11 nicht umschäumt, wie Figur 1 zu entnehmen ist. Die Umschäumung 13 jeder Lenkradspeiche 3 schließt sich deshalb erst an die Fortsätze 11 an, die auf dem Skelett 15 der Lenkradspeiche 3 unmittelbar anliegen.

Die Abdeckung 1 kann zu ihrer Montage komplett geöffnet werden. Hierzu ist die untere Wand 7 längs jedes Fortsatzes 11 parallel zum Verlauf der Lenkradspeichen 3 geschlitzt. Die sich dadurch ergebenden, gegenüberliegenden Verschlußränder 17, 19 jedes Fortsatzes 11 überlappen sich in geschlossenem Zustand (vgl. Figur 2), wobei am innenliegenden Verschlußrand 17 nach außen vorstehende, mit widerhakenförmigen Enden versehene Stifte 21 angegossen sind, die in entsprechende Öffnungen in dem außenliegenden Verschlußrand 19 eingreifen können. Die sich ergebende Befestigungseinrichtung ist insgesamt als Clip-Verbindung ausgebildet.

Auf der oberen Wand 5 sind mehrere Schaltflächen in die Abdeckung 1 eingeformt, nämlich eine mittig angeordnete Schaltfläche 23 zur Betätigung der Hupe und mehrere im Bereich der Fortsätze 11 vorgesehene Schaltflächen 25, die zum Beispiel zur Betätigung des Radios oder anderer elektrischer Einrichtungen im Fahrzeug dienen. Die Schaltflächen 23, 25 werden, wie in Figur 3a anhand der Schaltfläche 25 dargestellt, dadurch gebildet, daß die obere Wand 5 auf ihrer Innen- und Außenfläche eine die Schaltfläche 25 umrahmende Vertiefung 27 aufweist, so daß die Dicke der Abdeckung 1 in diesem Bereich reduziert ist. Dadurch läßt sich die Schaltfläche 23 von außen durch Fingerdruck nach innen bewegen, wie in Figur 3b gezeigt ist. Aufgrund des elastisch nachgiebigen Materials der Abdeckung 1 und der Vertiefungen 27 kann jede Schaltfläche 23, 25 nach innen gedrückt werden, und sie federt anschließend wieder in ihre Ausgangslage zurück. Durch Drücken wird die Schaltfläche 23 gegen eine an der Innenfläche der oberen Wand 5 vorgesehene Schaltfolie 29 zur Betätigung der Hupe gepreßt und durch Drücken der Schaltflächen 25 werden ebenfalls an der Innenfläche vorgesehene Potentiometerfolien 31 betätigt. Anstatt der Schaltfolie 29 oder der Potentiometerfolien 31, die schwimmend auf der Innenfläche befestigt sind, kann jedoch auch eine in die Abdeckung 1 integrierte, elektrisch leitende Schicht vorgesehen sein, so daß ein Stromkreis geschlossen wird.

Die Montage der Abdeckung 1 auf dem Fahrzeuglenkrad erfolgt folgendermaßen: Das Fahrzeuglenkrad wird mit einem bereits in seinem Nabeteil montierten Gassack-Modul an die Lenkwelle geschraubt. Die teilweise fehlende Umschäumung des Lenkrads im Bereich seines Nabenteils und des nabennahen Abschnitts der Lenkradspeichen 3 erhöht die Zugänglichkeit zu den Befestigungsstellen des Lenkrads. Anschließend wird abhängig davon, ob im Lenkrad integrierte Schalter vorgesehen sein sollen oder nicht, und abhängig von der Innenfarbe des Fahrzeugs eine entsprechende Abdeckung 1 über das Nabenteil und einen Teil der Lenkradspeichen 3 gestülpt. Dazu wird die untere Wand 7 der Abdeckung 1 komplett geöffnet, so daß bei einem Lenkrad mit drei Speichen die drei entstehenden Flansche nach außen geklappt werden können. Nachdem die Abdeckung 1 über das Lenkrad gestülpt worden ist, wird sie durch die clip-artigen Befestigungseinrichtungen 21 geschlossen. Da die Fortsätze 11 die Lenkradspeichen 3 vollständig umgeben und die untere Wand 7 das Lenkrad im Bereich des Nabenteils hintergreift, ergibt sich eine formschlüssige Verbindung zwischen Lenkrad und Abdeckung 1.

Nicht gezeigte, in die obere Wand 5 eingeschäumte Einlagen sorgen für ein definiertes Aufreißen und Öffnen der oberen Wand 5 bei sich entfaltendem Gassack im Kollisionsfall. Die Vertiefung 27, die die Schaltfläche 23 umrahmt, dient dabei als definierte Reißlinie.

## Patentansprüche

1. Abdeckung eines Gassack-Moduls, das in ein vorderseitig offenes Nabenteil eines Fahrzeuglenkrads integriert ist, **dadurch gekennzeichnet, daß** die Abdeckung (1) als den Nabenkörper ummantelnder, elastisch nachgieber Hohlkörper ausgebildet ist, der eine obere Wand (5), eine untere Wand (7) und eine diese verbindende Seitenwand (8) aufweist und im Bereich der unteren Wand (7) geöffnet werden kann, um von vorn über den Nabenkörper gestülpt zu werden, und der zur Arretierung am Lenkrad dieses mit der unteren Wand (7) hintergreift.

2. Abdeckung nach Anspruch 1, **dadurch gekennzeichnet, daß** sie manschettenartige Fortsätze (11) aufweist, die die Lenkradspeichen (3) mindestens auf einem Teil ihrer Länge umschließen und die im Bereich der unteren Wand (7) längs der Lenkradspeichen (3) zur Montage der Abdeckung (1) geöffnet werden können.

3. Abdeckung nach Anspruch 2, **dadurch gekennzeichnet, daß** die manschettenartigen Fortsätze (11) zum Arretieren der Abdeckung durch miteinander in Eingriff bringbare Befestigungseinrichtungen (21) an gegenüberliegenden Verschlußrändern (17, 19) der unteren Wand (7) wieder geschlossen werden können.

4. Abdeckung nach einem der vorstehenden Ansprüche, **dadurch gekennzeichnet, daß** sie Einrichtungen aufweist, die mit Befestigungseinrichtungen am Lenkrad in Eingriff gebracht werden können, um die Abdeckung (1) am Lenkrad zu arretieren.

5. Abdeckung nach Anspruch 3 oder 4, **dadurch gekennzeichnet, daß** die Befestigungseinrichtungen als Clip-Verbindungen ausgebildet sind.

6. Abdeckung nach einem der vorstehenden Ansprüche, **dadurch gekennzeichnet, daß** die obere Wand (5) mindestens einen auf ihrer Außenfläche abgesetzten und/oder vorstehenden Bereich aufweist, der eine federnd nachgiebige Schaltfläche (23, 25) bildet.

7. Abdeckung nach Anspruch 6, **dadurch gekennzeichnet, daß** die mindestens eine Schaltfläche (23, 25) durch wenigstens eine an der Außenfläche vorgesehene, die Schaltfläche (23, 25) umrahmende Vertiefung (27) gegenüber der übrigen Außenfläche abgegrenzt ist.

8. Abdeckung nach Anspruch 6 oder 7, **dadurch gekennzeichnet, daß** die obere Wand (5) an ihrer Innenfläche im Bereich der Schaltfläche (23, 25) eine Schaltfolie (29) aufweist oder daß eine elektrisch leitende Schicht in der oberen Wand (5) integriert ist, so daß durch Druck auf die Außenfläche der oberen Wand (5) ein Stromkreis geschlossen wird.

9. Abdeckung nach einem der vorstehenden Ansprüche, **dadurch gekennzeichnet, daß** sie wenigstens teilweise aus geschäumtem oder umschäumtem Kunststoff besteht.

10. Fahrzeuglenkrad mit einem Gassack-Modul, das in einem ausgesparten Nabenteil angeordnet ist, und mit einer Abdeckung (1) nach Anspruch 9, **dadurch gekennzeichnet, daß** die Abdeckung wenigstens teilweise die Polsterung des Nabenteils und/oder der Lenkradspeichen (3) bildet und daß das Nabenteil und/oder die Lenkradspeichen (3) im Bereich der Abdeckung (1) nicht oder nur geringfügig umschäumt sind.

11. Fahrzeuglenkrad nach Anspruch 10, **dadurch gekennzeichnet, daß** die Rückseite des Lenkrads Befestigungseinrichtungen aufweist, die mit Einrichtungen an der Abdeckung (1) in Formschluß gebracht werden können, um die Abdeckung (1) am Lenkrad zu arretieren.

12. Fahrzeuglenkrad nach Anspruch 10 oder 11, **dadurch gekennzeichnet, daß** an der Vorderseite des Gassack-Moduls eine Schaltfolie befestigt ist oder zwischen der Vorderseite des Gassack-Moduls und der oberen Wand (5) der Abdeckung (1) eingelegt ist.

## Claims

1. A cover for a gas bag module integrated in a hub part, which is open at its front side, of a vehicle steering wheel, **characterised in that** the cover (1) is configured as a flexible hollow body which envelops the hub body, comprises an upper wall (5), a lower wall (7) and a side wall (8) connecting the upper and lower walls, and is adapted to be opened in the region of said lower wall (7) so that it may be fitted over the hub body and engages behind the steering wheel by its lower wall (7) for arresting the hollow body to the steering wheel.

2. The cover as set forth in claim 1, **characterised in that** it comprises cuff-like protrusions (11) which surround the steering wheel spokes (3) at least over part of their length and which in the region of said lower wall (7) may be opened along the steering wheel spokes (3) for assembly of said cover (1).

3. The cover as set forth in claim 2, **characterised in that** said cuff-like protrusions (11) for arresting said cover can be re-closed by fasteners (21) engageable with each other at opposing closure rims (17, 19) of said lower wall (7).

4. The cover as set forth in any of the preceding claims, **characterised in that** it comprises means which are engageable by fasteners provided on the steering wheel for arresting said cover (1) at said steering wheel.

5. The cover as set forth in claim 3 or 4, **characterised in that** said fasteners are configured as clip connectors.

6. The cover as set forth in any of the preceding claims, **characterised in that** said upper wall (5) comprises at least one region offset and/or protruding from its outer surface, which forms a resilient switch surface (23, 25).

7. The cover as set forth in claim 6, **characterised in that** said at least one switch surface (23, 25) is delimited from the remaining outer surface by at least one depression (27) provided at said outer surface and framing said switch surface (23, 25).

8. The cover as set forth in claim 6 or 7, **characterised in that** said upper wall (5) comprises a film switch (29) at its inner surface in the region of said switch surface (23, 25) or **in that** an electrically conducting layer is integrated in said upper wall (5) so that an electric circuit is closed by pressure applied to the outer surface of said upper wall (5).

9. The cover as set forth in any of the preceding claims, **characterised in that** it consists at least in part of foamed or foam-sheathed plastics material.

10. A vehicle steering wheel including a gas bag module arranged in a recessed hub part and a cover (1) as set forth in claim 9, **characterised in that** said cover forms at least in part the padding of said hub part and/or of said steering wheel spokes (3) and **in that** said hub part and/or said steering wheel spokes (3) are not or only slightly foam-sheathed in the region of the cover (1).

11. The vehicle steering wheel as set forth in claim 10, **characterised in that** the rear side of said steering wheel comprises fasteners which are able to engage interlocking means on said cover (1) for arresting said cover (1) at said steering wheel.

12. The vehicle steering wheel as set forth in claim 10 or 11, **characterised in that** a film switch is secured on the front face of the gas bag module or is inserted between the front face of said gas bag module and said upper wall (5) of said cover (1).

## Revendications

1. Couvercle pour un module de sac à gaz, qui est intégré dans une partie ouverte, du côté avant, du moyeu d'un volant de direction de véhicule à moteur, **caractérisé en ce que** le couvercle (1) est constitué sous la forme d'un corps creux enveloppant le corps du moyeu et élastiquement flexible, qui présente une paroi supérieure (5), une paroi inférieure (7) et une paroi latérale (8), qui relie celles-ci, et qui peut être ouvert dans la zone de la paroi inférieure (7), pour être retourné de l'avant sur le corps de moyeu, et qui vient en prise par derrière avec la paroi arrière (7) pour bloquer celui-ci sur le volant de direction.

2. Couvercle selon la revendication 1, **caractérisé en ce qu'**il présente des prolongements (11) en forme de manchettes, qui entourent les rayons (3) du volant de direction au moins sur une partie de leur longueur et qui peuvent être ouverts dans la zone de la paroi inférieure (7) le long des rayons (3) du volant de direction pour permettre le montage du couvercle (1).

3. Couvercle selon la revendication 2, **caractérisé en ce que** les prolongements (11) en forme de manchettes peuvent être à nouveau refermés pour bloquer le couvercle au moyen de systèmes de fixation (21), qui peuvent être mis en prise les uns avec les autres sur des bords de fermeture opposés (17, 19) de la paroi inférieure (7).

4. Couvercle selon l'une des revendications précédentes, **caractérisé en ce qu'**il présente des systèmes qui peuvent être mis en prise avec des systèmes de fixation sur le volant de direction, pour bloquer le couvercle (1) sur le volant de direction.

5. Couvercle selon la revendication 3 ou la revendication 4, **caractérisé en ce que** les systèmes de fixation sont constitués sous la forme de liaisons à clip.

6. Couvercle selon l'une des revendications précédentes, **caractérisé en ce que** la paroi supérieure (5) présente au moins une zone qui est déposée sur sa surface extérieure et/ou saillante et qui forme une surface (23, 25) élastiquement flexible de couplage.

7. Couvercle selon la revendication 6, **caractérisé en ce que** l'une au moins des surfaces de couplage (23, 25) est délimitée par au moins un renfoncement (27), prévu sur la surface extérieure et encadrant la surface de couplage (23, 25) par rapport au reste de la surface extérieure.

8. Couvercle selon la revendication 6 ou 7,
**caractérisé en ce que** la paroi supérieure (5) présente sur sa face intérieure dans la zone de la surface de couplage (23, 25) une feuille de couplage (29) ou **en ce que** l'on intègre une couche électriquement conductrice dans la paroi supérieure (5), de telle sorte que l'on puisse fermer un circuit électrique en appuyant sur la face extérieure de la paroi supérieure (5).

9. Couvercle selon l'une des revendications précédentes, **caractérisé en ce qu'**il est réalisé au moins en partie en une matière plastique moussée ou entourée de mousse.

10. Volant de direction de véhicule avec un module de sac à gaz, qui est disposé dans une partie évidée du moyeu, et qui comprend un couvercle (1) selon la revendication 9, **caractérisé en ce que** le couvercle forme au moins en partie le rembourrage de la partie de moyeu et/ou des rayons (3) du volant de direction et **en ce que** la partie du moyeu et/ou les rayons (3)du volant de direction ne sont pas entourés de mousse dans la zone du couvercle (1) ou ne le sont que très légèrement.

11. Volant de direction de véhicule selon la revendication 10, **caractérisé en ce que** le côté arrière du volant de direction présente des systèmes de fixation, qui peuvent être mis en engagement de formes sur le couvercle (1), pour bloquer le couvercle (1) sur le volant de direction.

12. Volant de direction de véhicule selon la revendication 10 ou 11, **caractérisé en ce que** l'on fixe sur le côté avant du module de sac à gaz une feuille de couplage ou on l'insère entre le côté avant du module de sac à gaz et la paroi supérieure (5) du couvercle (1).
